# FASCICULE DE BREVET EUROPEEN

(11) **EP 0 373 992 B1**
(45) Date de publication et mention de la délivrance du brevet: **26.05.1993**
(21) Numéro de dépôt: 89403283.8
(22) Date de dépôt: 28.11.1989
(51) Int. Cl.: C03B 23/03, C03B 23/023, C03B 23/035

(54) **Procédé et dispositif d'obtention de vitrages automobiles bombestrempes**
Verfahren und Anlage zur Herstellung von gewölbt gehärteten Automobilscheiben
Process and apparatus for producing convex tempered car windows

(30) Priorité: 14.12.1988 DE 3841989
(43) Date de publication de la demande: 20.06.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eupen (BE); Kuster, Hans-Werner, D-5100 Aachen (DE); Havenith, Hubert, D-5102 Würselen (DE); D'Iribarne, Benoit, D-5100 Aachen (DE)
(74) Mandataire: Menes, Catherine

(56) Documents cités:
- EP-A- 0 312 439
- EP-A- 0 328 442
- DE-A- 3 525 909
- DE-A- 3 541 773
- FR-A- 2 237 847
- GB-A- 2 188 045
- US-A- 3 741 743
- US-A- 4 661 141

## Description

L'invention a trait aux techniques d'obtention de vitrages automobiles bombés et trempés, selon lesquelles les feuilles de verre sont réchauffées à la température de bombage dans un four horizontal traversant, sont bombées à la forme souhaitée, en position horizontale, par pressage entre une forme supérieure pleine et une forme inférieure du type cadre en plusieurs parties mobiles les unes par rapport aux autres, au moins une des parties latérales étant rabattue lors du pressage puis sont conduites sur un cadre de transport et de trempe correspondant à la forme des feuilles de verre bombées dans une station de trempe où elles sont trempées par soufflage d'air froid.

Un procédé de cet art est connu de US-A-4 661 141. L'emploi de cadres de bombage en plusieurs parties s'est avéré nécessaire pour la production de vitrages de formes complexes. Conformément au document précité, après le bombage, la feuille de verre est maintenue par aspiration contre la forme supérieure. Le cadre de bombage est abaissé et amené par une sortie latérale hors de la station de bombage. La feuille de verre est alors prise en charge par un cadre de transport en une seule partie dont le profil correspond au profil de bombage conféré à la feuille de verre puis la feuille de verre bombée est conduite sur ce cadre de transport dans la station de trempe. Pendant l'opération de trempe par soufflage d'air froid, la feuille de verre est soutenue tout le long de sa périphérie par ce cadre constitué par une seule partie non déformable.

Dans certaines conditions, ce procédé connu peut être mis en oeuvre suivant un mode simplifié ; selon celui-ci la la forme inférieure de bombage formée de plusieurs parties sert également de cadre de transport et de trempe. Cela permet de raccourcir les temps de cycle et de simplifier le dispositif dans l'ensemble.

Cette variante de réalisation dans laquelle un seul et même cadre est utilisé pour le bombage et pour la trempe ne peut malheureusement pas être employée pour la production de vitrages présentant un bombage prononcé à proximité de leurs bords. Dans ce cas, des déformations apparaissent au niveau des zones marginales très cintrées, déformations sous forme de petites ondulations qui créent des défauts optiques. L'analyse montre que ces déformations ondulatoires sont dues à la fois à l'outil de bombage et au mode de refroidissement dans la station de trempe et qu'elles ne peuvent être supprimées par le seul réglage des paramètres du procédé dans le cadre des mesures usuelles de réglage bien connues.

De même, il est connu de la demande de brevet DE-A-3525909, un procédé de bombage et de trempe de vitrages automobiles selon lequel les feuilles de verre, réchauffées dans un four tunnel traversant, sont menées en position horizontale entre une forme supérieure et une forme inférieure en plusieurs parties et à la suite du processus de bombage par pressage sont directement trempées dans la station de bombage par de l'air froid soufflé en direction des feuilles de verre au travers d'orifices pratiqués dans les outils de bombage. La forme inférieure de bombage est constituée d'un cadre externe en plusieurs parties liées entre elles par des articulations entourant une forme pleine intérieure munie d'orifices pour l'air soufflé. La surface de contact de la forme de bombage, c'est-à-dire la surface de la forme inférieure entourée par le cadre externe contre laquelle vient effectivement se plaquer la feuille de verre est revêtue d'un mat en fibres réfractaires. Pendant le processus de trempe, la feuille de verre est supportée uniquement par le cadre extérieur. De plus, ce procédé ne s'applique pas à la fabrication de feuilles de verre comportant des zones marginales très bombées.

Il est connu de la demande de brevet GB-A-2 188 045 un dispositif de bombage dans lequel la forme supérieure sert tour à tour de forme mâle de pressage et de caissons de trempe. La feuille de verre est pressée contre cette forme supérieure pleine par un cadre annulaire dont la surface est revêtue d'un feutre isolant thermique puis transférée sur un cadre de trempe monté concentrique autour du cadre de pressage. Ce cadre de trempe a une structure cannelée et est revêtu d'un treillis métallique. Un caisson inférieur de soufflage de trempe est logé sous le dispositif, entre le cadre annulaire de pressage. Dans cette variante, deux cadres distincts sont utilisés pour le bombage et pour la trempe tout en évitant les transferts du poste de bombage au poste de trempe. Néanmoins, cette installation est très complexe et il est pratiquement impossible de déplacer la feuille de verre par rapport aux caissons pendant la trempe ce qui peut entraîner des défauts de trempe importants. Par ailleurs, les outils de pressage sont refroidis à chaque cycle par la trempe ce qui n'est pas favorable à un bombage de qualité, surtout si le vitrage doit comporter des zones marginales fortement bombées.

D'autre part, il est connu du brevet US-A-3 741 743 un cadre de bombage et de trempe revêtu d'un premier treillis métallique à larges mailles supportant un second treillis métallique à mailles fines écartant la feuille de verre du premier treillis. Même fin, le second treillis se doit d'être suffisamment ouvert pour laisser passer l'air de trempe et de ce fait, peut entraîner un risque de marquage du verre, surtout dans les zones où les forces appliquées sont les plus fortes, notamment dans les zones marginales fortement bombées.

Il est enfin connu de la demande de brevet DE-A-35 41773 de recouvrir des formes de bombage pleines par un mat feutré présentant de préférence une épaisseur comprise entre 3 et 10 mm et qui contient entre autres des fibres minces en acier.

L'invention vise à développer un procédé rendant possible l'obtention de vitrages automobiles dont une ou plusieurs zones marginales sont fortement cintrées et néanmoins d'une parfaite qualité optique, c'est-à-dire sans déformations non souhaitées de la feuille de verre.

Ce problème est résolu par un procédé conforme à la revendication 1, mis en oeuvre par un dispositif conforme à la revendication 2.

Le procédé d'obtention de vitrages automobiles bombés et trempés selon l'invention est dérivé du procédé selon lequel les feuilles de verre sont réchauffées à la température de bombage dans un four horizontal traversant, sont bombées selon la forme souhaitée - en position horizontale -par pressage entre une forme supérieure pleine et un cadre de bombage ouvert en son centre et constitué de plusieurs parties mobiles les unes par rapport aux autres, servant de forme inférieure de bombage, au moins une des parties latérales étant rabattue lors du pressage, puis après leur formage les feuilles de verre bombées sont conduites par un cadre de transport et de trempe correspondant à la forme des feuilles de verre bombées dans une station de trempe où elles sont trempées par soufflage d'air froid.

Le perfectionnement selon l'invention consiste en ce que le cadre de bombage est aussi utilisé comme cadre de transport et de trempe et que pour former un vitrage présentant au moins une zone marginale relativement fortement bombée, la partie latérale du cadre de bombage qui sert à déformer cette zone marginale est revêtue d'un matériau feutré élastiquement déformable, en fibres réfractaires, ladite partie latérale revêtue dudit matériau feutré étant écartée de la feuille de verre lors de la trempe de la feuille de verre.

Grâce à ce revêtement des parties latérales mobiles du cadre de bombage par un matériau feutré élastiquement déformable, il se produit une égalisation de l'application des forces, c'est-à-dire que la couche relativement fine de matériau feutré agit en uniformisant les forces de bombage appliquées sur toute la surface de contact de la feuille de verre. Le revêtement permet ainsi d'éviter que localement, l'intensité de la force de bombage qui agit sur la feuille de verre ne devienne très grande, ce qui était systématiquement le cas auparavant dès lors que l'on voulait produire des vitrages comportant des zones marginales très fortement bombées et qui conduisait au gauchissement inévitable de ces zones marginales avec les inconvénients mentionnés plus haut. La partie basculante du cadre de bombage munie de ce revêtement feutré peut ainsi appliquer ces zones marginales de la feuille de verre contre la forme supérieure de bombage avec une pression uniforme et en douceur, de sorte que la feuille de verre reste totalement exempte de défauts optiques. Une autre caractéristique essentielle du procédé selon l'invention consiste en ce qu'au début du processus de trempe, lorsque la feuille de verre est amenée dans la station de trempe par le cadre de bombage, la partie latérale mobile du cadre de bombage est écartée de la feuille de verre qui ainsi peut être directement soumise à l'action de l'air de refroidissement et non masquée par cette partie latérale. Avec cette manière de procéder, la zone marginale de la feuille de verre n'est plus soutenue mécaniquement pendant la trempe ; toutefois, en raison de la forte déformation subie, cette zone marginale de la feuille de verre a au niveau de cette zone marginale une rigidité qui suffit à éviter toute déformation supplémentaire durant le processus de trempe.

Le procédé selon l'invention autorise ainsi la fabrication de vitrages comportant des bords fortement bombés, et ceci en n'employant qu'un seul cadre qui sert aussi bien de cadre de bombage, de cadre de transport vers la station de trempe et de cadre de trempe, ce qui conduit à des temps de cycle relativement courts.

L'invention a également pour objet un dispositif pour la mise en oeuvre du procédé, constitué d'un four traversant horizontal pour réchauffer à la température de bombage les feuilles de verre, d'une station de bombage jouxtant le four et comportant une forme supérieure pleine, d'une station de trempe disposée à la suite de la station de bombage et d'au moins un cadre de bombage ouvert en son centre constitué de plusieurs parties mobiles les unes par rapport aux autres, servant de forme inférieure de bombage et pouvant être déplacée entre la station de bombage et la station de trempe, un matériau feutré élastiquement déformable, en fibres réfractaires, étant fixé sur la ou les partie (s) mobile (s) du cadre de bombage.

De préférence, on utilise un feutre en fibres métalliques, avantageusement des fibres en acier inoxydable du type alliage nickel-chrome, une porosité supérieure à 70 % étant alors requise pour obtenir l'élasticité souhaitée.

La manière et les moyens utilisés pour amener entre les formes de bombage la feuille de verre réchauffée à la température de bombage ne jouent absolument aucun rôle dans le cadre de la présente invention et les différents procédés connus de cet art peuvent convenir. La feuille de verre peut être par exemple aspirée lorsqu'elle atteint l'extrémité du convoyeur traversant le four et déposée sur le cadre de bombage. Une autre possibilité consiste à prolonger ledit convoyeur jusque dans la station de bombage dans laquelle la forme supérieure est suspendue à des moyens de montée-baisse et est associée à des moyens d'aspiration qui soulèvent la feuille de verre. Il est encore possible d'appliquer la feuille de verre contre la forme supérieure au moyen d'un courant gazeux chaud ascendant ou d'utiliser pour la soulever un cadre qui vient se loger sous le convoyeur entre deux opérations, le cadre levant la feuille de verre jusqu'à ce qu'elle soit en contact avec la forme supérieure munie d'une surface aspirante puis est rabaissée sous le convoyeur.

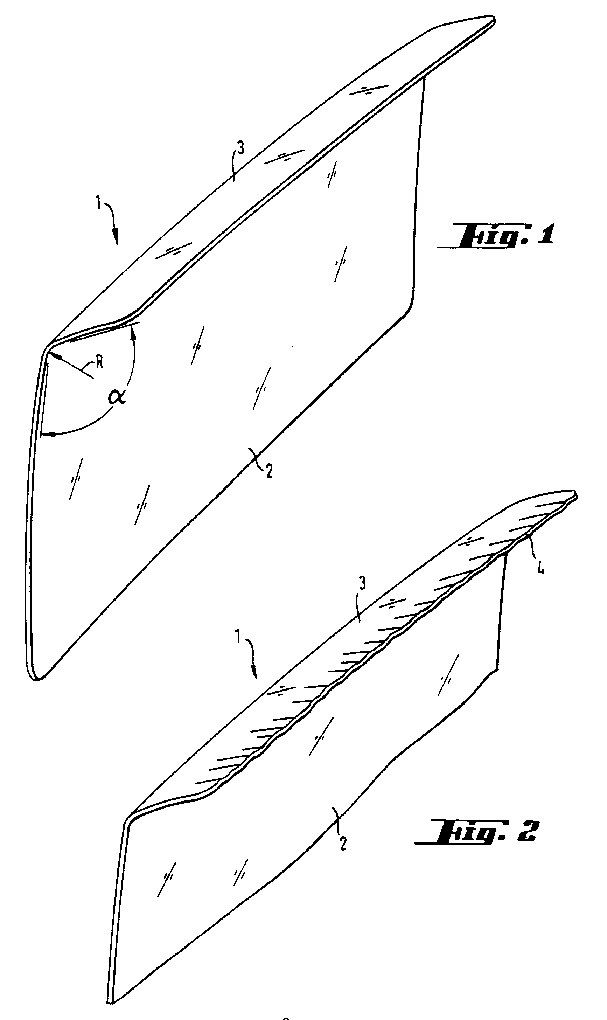

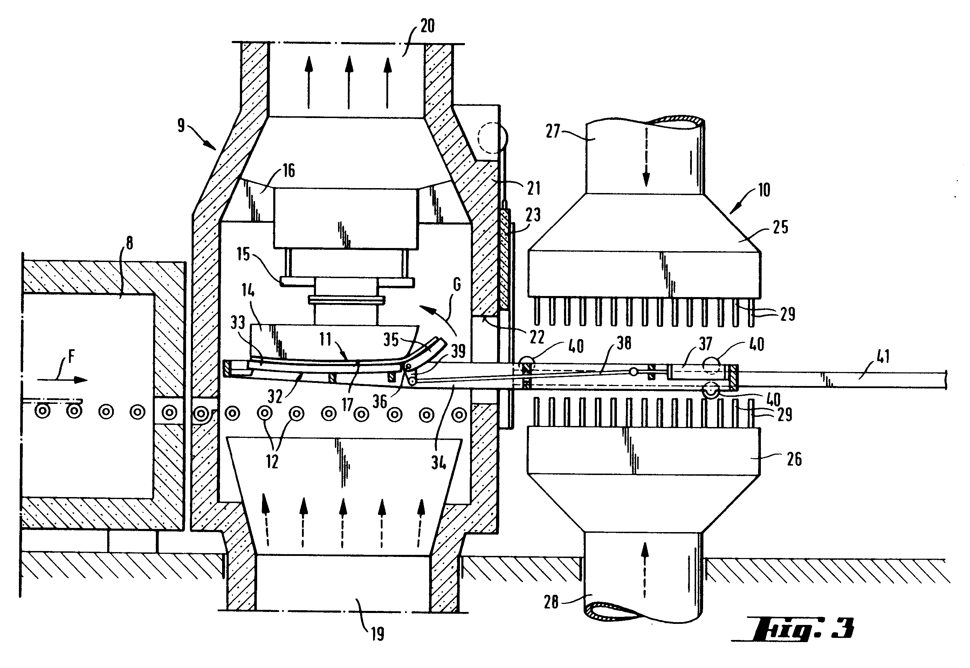

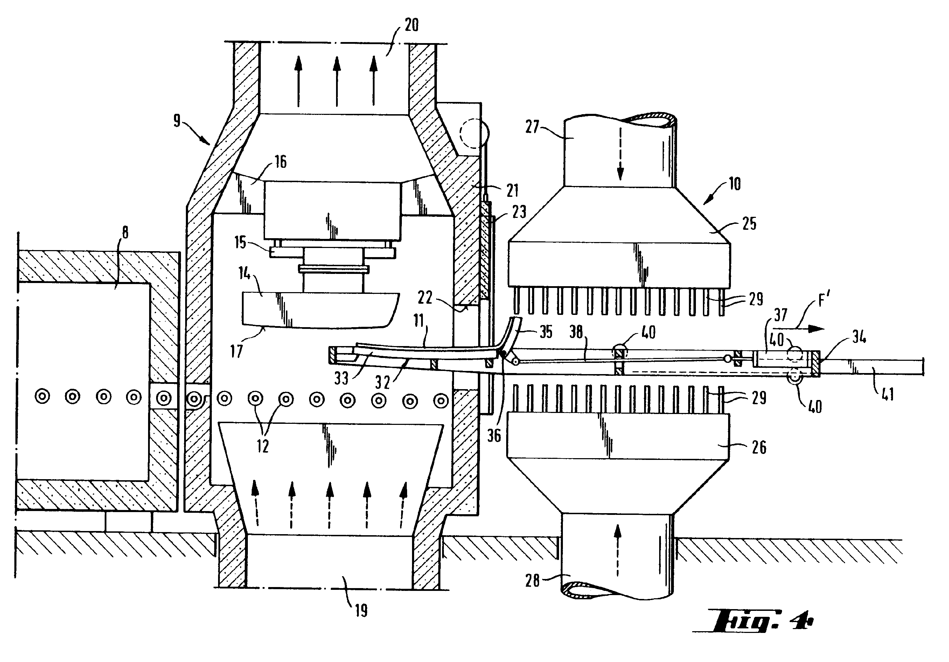

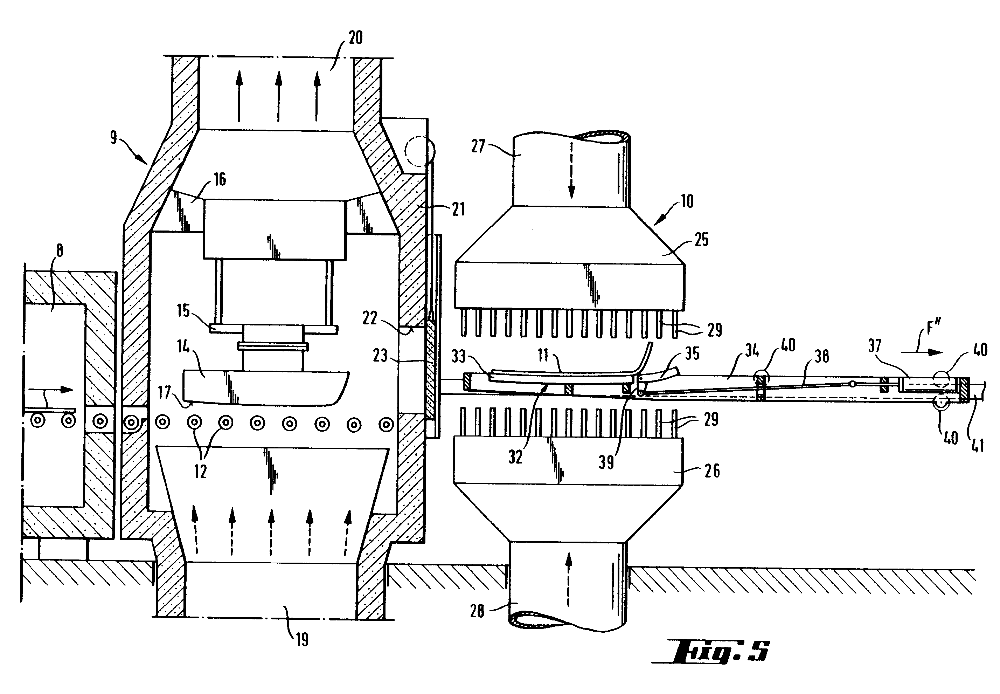

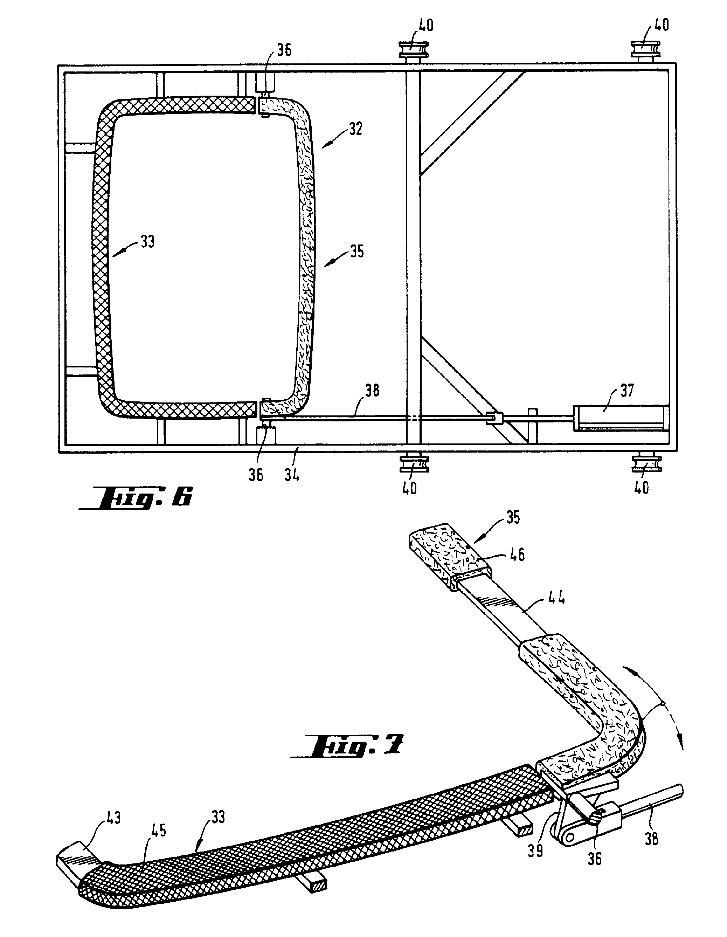

D'autres détails et caractéristiques avantageuses de l'invention sont décrits ci-après en référence aux dessins annexés qui représentent :
. **figure 1** : un vitrage automobile, comportant une zone marginale relativement fortement bombée, pour la production duquel le procédé selon l'invention convient plus particulièrement,
. **figure 2** : un vitrage automobile du même type que celui représenté figure 1 et comportant les défauts de formage typiques des vitrages obtenus avec les procédés connus de l'état de l'art,
. **figure 3** : une coupe longitudinale d'une installation de bombage-trempe, vue lors du bombage,
. **figure 4** : l'installation représentée à la figure 3, vue lors du transport vers la station de trempe d'une feuille de verre bombée,
. **figure 5** : l'installation représentée à la figure 3, vue lors de la trempe d'une feuille de verre,
. **figure 6** : un cadre de bombage selon l'invention constitué de plusieurs parties,
. **figure 7** : une vue partielle en perspective, à plus grande échelle, du cadre de la figure 6.

A titre d'exemple on a représenté figure 1 une forme de feuille de verre 1 typiquement susceptible d'être produite en suivant l'enseignement du procédé selon l'invention. La feuille de verre 1 d'un vitrage de sécurité trempé thermiquement présente une zone centrale 2 avec un léger bombage sphérique et une zone marginale 3 qui est disposée selon un angle α d'environ 80° par rapport à la zone centrale. Le rayon de courbure R est d'environ 4 cm. Cette zone marginale possède elle-même un léger bombage sphérique.

La figure 2 montre le type des déformations obtenues avec les procédés de bombage selon l'art. Le long du bord 4 de la zone marginale 3, il se forme des déformations sous forme d'ondulations qui constituent des défauts optiques. Ce sont ces déformations très dommageables qui sont évitées avec les mesures selon l'invention.

Comme il ressort des figures 3 à 5, une installation de bombage-trempe prévue pour la mise en oeuvre du procédé selon l'invention comporte un four traversant horizontal 8, une station de bombage 9 et une station de trempe 10. Des rouleaux moteurs 12 assurent le transport des feuilles de verre au travers du four 8 et dans la station de bombage 9.

Une forme supérieure de bombage 14 fixée à un cadre 15 est disposée au-dessus des rouleaux 12 dans la station de bombage 9. Le cadre 15 est rattaché à des poutres support 16 par l'intermédiaire d'un dispositif de montée-baisse. La forme supérieure de bombage 14 est constituée par une plaque pleine 17 de forme convexe, tournée vers le bas, et représente la partie mâle de la pression de bombage. Les outils de bombage sont tous placés à l'intérieur d'un conduit alimenté par la partie inférieure 19 par un courant de gaz chaud qui peut être introduit dans la zone de bombage suivant un débit et une pression réglables. Le courant gazeux ressort par la partie supérieure 20 et est renvoyé vers la partie inférieure 19 par un circuit fermé. Les parois 21 de la chambre de bombage sont munies d'une ouverture 22 qui peut être fermée par une porte 23.

La station de trempe 10 comporte un caisson de soufflage supérieur 25 et un caisson de soufflage inférieur 26, alimentés en air froid respectivement par les conduites 27 et 28. L'air froid est soufflé sur la feuille de verre 11 par les buses 29 dès que celle-ci se trouve entre les caissons de soufflage 25 et 26.

L'installation comprend de plus une forme inférieure du type cadre de bombage 32 coopérant avec la forme supérieure 14. Le cadre 32 ici représenté est en deux parties et est schématisé de manière plus détaillée aux figures 6 et 7. La partie principale 33 du cadre 32 est disposée de manière fixe à l'intérieur d'un cadre 34 ; la partie latérale 35 du cadre 32 est articulée autour de l'axe 36 ; ces mouvements sont commandés par un vérin pneumatique 37 fixé au cadre 34 et qui agit grâce à une tige de piston 38 sur un levier 39 lié à la partie latérale 35. Le cadre 34 est muni de roues 49 qui roulent sur des rails 41 ; au moyen d'un dispositif moteur ici non représenté, la cadre 34 peut être déplacé en 3 positions à savoir : une premier position dans laquelle le cadre de bombage 32 se trouve sous la forme supérieure de bombage 14, une seconde position dans laquelle le cadre de bombage 32 se trouve entre les caissons de soufflage de trempe 25 et 26 et une troisième position dans laquelle le cadre de bombage est hors de la station de trempe, position pendant laquelle s'effectue le déchargement des vitrages bombés-trempés.

Les parties principale 33 et latérale 35 du cadre de bombage 32 sont formées de rails métalliques 43 et 44 entourés respectivement de revêtements 45 et 46. Le revêtement 45 doit d'une part être un bon isolant thermique - de manière à ne pas refroidir la feuille de verre à bomber lorsqu'elle vient toucher le cadre 32 refroidi lors de la trempe de la feuille de verre précédente et d'autre part durant la trempe il ne doit pas s'opposer au passage de l'air froid entre la surface de la feuille de verre et le rail métallique 33, de manière à ce que la feuille de verre subisse une trempe uniforme même pour ce qui concerne sa surface de contact avec la partie principale 33 du cadre 32. Ce revêtement 45 peut être par exemple en fibres de verre ou autres fibres ou tissus réfractaires usuellement employés dans ce même but.

Il est plus particulièrement avantageux d'utiliser un revêtement en fibres d'acier tel que celui décrit dans la demande de brevet européen EP-A-312 439. Un tel revêtement est constitué d'un tissu essentiellement métallique formé de mèches d'une pluralité de fils élémentaires d'un diamètre inférieur à 50 microns ; le tissu a une porosité à l'air d'au moins 60 % et de préférence supérieure à 80 % afin de permettre au revêtement d'être traversé par l'air de trempe. La conductivité thermique du tissu dans le sens de l'épaisseur est inférieure à 3 W M⁻¹ K⁻¹ et de préférence à 0,2 WM⁻¹K⁻¹. Le tissu d'une épaisseur de préférence comprise entre 0,5 et 2 mm forme des mailles dont la surface est de préférence comprise entre environ 4 mm² et 100 mm².

Le revêtement 46 couvrant la partie latérale basculante 35 est constitué par un feutre en fibres métalliques dont l'épaisseur est comprise entre 2 et 10 mm et de préférence voisine d'environ 3,5 mm. De bons résultats ont été obtenus avec des fibres dont le diamètre est compris entre 5 et 50 microns et est par exemple d'environ 8 microns de diamètre, dans un alliage nickel-chrome à 80 % de nickel et 20 % de chrome. La masse surfacique d'un tel feutre métallique est d'environ 500 g/m². La porosité à l'air du feutre est supérieure à 80 % et de préférence à 95 %. Un tel feutre présente l'élasticité requise et a de plus une bonne résistance à la chaleur, un bon coefficient de frottement et une résistance à l'abrasion suffisamment élevée. De tels feutres en fibres métalliques sont disponibles dans le commerce.

Les figures 3 à 5 illustrent le déroulement du procédé selon l'invention. La feuille de verre traverse - en suivant la direction de la flèche F - le four 8 et atteint la station de bombage 9 où elle est stoppée sur les rouleaux moteurs 12 sous la forme supérieure de bombage 14 qui a été auparavant abaissée en position extrême représentée figure 5. Dans cette phase, le cadre 34 portant le cadre de bombage 32 se trouve à l'extérieur de la chambre de bombage et la porte 23 ferme l'ouverture 22. Dès que la feuille de verre est correctement immobilisée sous la forme supérieure de bombage 14, on fait passer le courant gazeux ascendant chaud au travers de la station de bombage. Ce courant gazeux soulève la feuille de verre au-dessus des rouleaux moteurs 12 et vient l'appliquer par en dessous contre la forme supérieure de bombage 14. Sous l'action de ce courant gazeux, la partie centrale de la feuille de verre se déforme pour épouser la forme de la surface de bombage 17. La forme supérieure de bombage 14 et la feuille de verre 11 sont alors relevées, le courant gazeux appliquant toujours la feuille de verre 11 contre la forme 14.

Lorsque la forme supérieure de bombage 14 est en position haute, la porte 23 est ouverte et le cadre 34 pénètre dans la station de bombage 9 et vient se placer sous la forme supérieure 14, dans la position représentée figure 3. La partie latérale basculante 35 du cadre de bombage 32 est en position basse, alignée avec la partie principale 33. La forme supérieure 14 peut être alors abaissée de sorte que la feuille de verre est pressée contre le cadre de bombage 32 ce qui permet de conformer suivant la forme définitive souhaitée la partie principale de la feuille de verre, en contact avec la partie principale 33 du cadre 32. Simultanément, le vérin pneumatique 37 rabat la partie latérale 35 suivant la direction indiquée par la flèche G de sorte que le revêtement feutré 46 applique la zone marginale de la feuille 11 contre la forme supérieure 14.

Le processus de bombage achevé, le courant gazeux chaud est interrompu ou tout du moins fortement réduit et la forme supérieure de bombage 14 est ramenée en position haute. La feuille de verre 11 repose alors sur le cadre de bombage 32 dont la partie latérale 35 est rabattue en position supérieure. Le cadre 34 repart alors vers la station de trempe 10 en direction de la flèche F' et amène la feuille de verre bombée 11 entre les caissons de soufflage 25 et 26. Cette phase du procédé est représentée à la figure 4. La porte 23 referme l'ouverture 22 dès que le cadre 34 a quitté la chambre de bombage.

Le processus de trempe peut alors commencer et on met en route les caissons de soufflage d'air froid 25 et 26. Au moment même où le soufflage de trempe débute, le vérin pneumatique 37 écarte la partie latérale 35 du cadre de bombage 32, de sorte que la zone marginale la plus fortement bombée de la feuille de verre se retrouve alors non soutenue. Cette zone marginale de la feuille de verre 11 a toutefois une rigidité suffisante pour qu'il ne se produise pas de déformations complémentaires dues à l'effet de son propre poids. Cette rigidité est due à son fort bombage et au léger refroidissement qui se produit déjà lors du transport de la station de bombage à la station de trempe. La zone marginale peut ainsi être parfaitement trempée, aucun obstacle ne s'opposant à l'écoulement de l'air de refroidissement à sa proximité. Pendant ce processus de trempe, la feuille de verre suivante sort du four 8 et pénètre dans la station de bombage 9 pour y venir se positionner sous la forme supérieure de bombage.

Après l'achèvement de la trempe, le cadre 34 conduit la feuille de verre bombée-trempée hors de la station de trempe vers une station de déchargement (flèche F'') et repart vers la station de bombage 9 pour un prochain cycle une fois la feuille de verre 11 évacuée.

## Revendications

1. Procédé d'obtention de vitrages automobiles bombés-trempés selon lequel les feuilles de verre (11) sont réchauffées à la température de bombage dans un four horizontal traversant (8), sont bombées selon la forme souhaitée, en position horizontale, par pressage entre une forme supérieure pleine (14) et un cadre de bombage (32)
pouvant être déplacé entre la station de bombage (9) et la station de trempe par soufflage d'air froid (10), ouvert en son centre et constitués de plusieurs parties (33, 35) mobiles les unes par rapport aux autres, servant de forme inférieure de bombage, au moins une des parties latérales (35), rabattue lors du pressage pour former une zone marginale (3) relativement fortement bombée, étant revêtue d'un matériau feutré (46) élastiquement déformable en fibres réfractaire, puis écartée de la feuille de verre pendant la trempe de la feuille de verre (11).

2. Dispositif pour la mise en oeuvre du procédé selon la revendication 1, constitué d'un four traversant horizontal (8) pour réchauffer à la température de bombage les feuilles de verre (11), d'une station de bombage (9) jouxtant le four (8), comportant une forme supérieure pleine (14), d'une station de trempe (10) disposée à la suite de la station de bombage (9) et d'au moins un cadre de bombage (32) pouvant être déplacé entre la station de bombage (9) et la station de trempe (10), ouvert en son centre avec au moins une partie latérale (35) mobile par rapport au reste du cadre de bombage, revêtue d'un matériau feutré (46) élastiquement déformable, en fibres réfractaires.

3. Dispositif selon la revendication 2, **caractérisé en ce que** le matériau feutré (46) présente une épaisseur comprise entre 2 et 10 mm.

4. Dispositif selon l'une des revendications 2 ou 3, **caractérisé en ce que** le matériau feutré (46) est constitué de fibres minérales.

5. Dispositif selon la revendication 4, **caractérisé en ce que** lesdites fibres minérales sont des fibres métalliques.

6. Dispositif selon la revendication 5, **caractérisé en ce que** lesdites fibres métalliques sont dans un alliage nickel-chrome.

7. Dispositif selon l'une des revendications 2 à 6, **caractérisé en ce que** la porosité à l'air du matériau feutré (46) est supérieur à 80 %.

8. Dispositif selon l'une des revendications 2 à 6, **caractérisé en ce que** ledit matériau (46) est un feutre obtenu par agglomération de fibres nickel-chrome de 5 à 50 micromètres d'épaisseur et d'une porosité supérieure à 95%.

## Patentansprüche

1. Verfahren zur Herstellung gebogener vorgespannter Autoglasscheiben, bei dem die Glasscheiben (11) in einem Horizontal-Durchlaufofen (8) auf Biegetemperatur erwärmt und in horizontaler Lage durch Pressen zwischen einer oberen Vollform (14) und einem zwischen der Biegestation (9) und der Station (10) zum Vorspannen durch Beblasen mit Kaltluft verfahrbaren Biegerahmen (32) in die gewünschte Form gebogen werden, wobei der Biegerahmen (32) in der Mitte offen ist, und aus mehreren zueinander beweglichen Teilen (33,35) besteht und als untere Biegeform dient, und wenigstens eines der Seitenteile (35), das während des Preßvorgangs zur Bildung einer verhältnismäßig stark gebogenen Randzone (3) verschwenkt wird, mit einem elastisch verformbaren filzähnlichen Material (46) aus hitzebeständigen Fasern versehen ist und während des Vorspannvorgangs der Glasscheibe (11) von der Glasscheibe entfernt wird.

2. Vorrichtung zur Durchführung des Verfahrens nach Anspruch 1, mit einem Horizontal-Durchlaufofen (8) zum Erwärmen der Glasscheiben (11) auf Biegetemperatur, einer an den Durchlaufofen (8) anschließenden Biegestation (9) mit einer oberen vollflächigen Biegeform (14), einer der Biegestation (9) nachgeschalteten Vorspannstation (10) und wenigstens einem zwischen der Biegestation (9) und der Vorspannstation (10) verfahrbaren Biegerahmen (32), der in der Mitte offen ist und wenigstens ein in Bezug auf den übrigen Teil des Biegerahmens bewegliches Seitenteil (35) aufweist, das mit einem elastisch verformbaren filzähnlichen Material (46) aus hitzebeständigen Fasern bekleidet ist.

3. Vorrichtung nach Anspruch 2, dadurch gekennzeichnet, daß das filzähnliche Material (46) eine Dicke zwischen 2 und 10 mm aufweist.

4. Vorrichtung nach einem der Ansprüche 2 oder 3, dadurch gekennzeichnet, daß das filzähnliche Material (46) aus anorganischen Fasern besteht.

5. Vorrichtung nach Anspruch 4, dadurch gekennzeichnet, daß die anorganischen Fasern Metallfasern sind.

6. Vorrichtung nach Anspruch 5, dadurch gekennzeichnet, daß die Metallfasern aus einer Nickel-Chrom-Legierung bestehen.

7. Vorrichtung nach einem der Ansprüche 2 bis 6, dadurch gekennzeichnet, daß die Porosität des filzähnlichen Materials (46) höher als 80 % ist.

8. Vorrichtung nach einem der Ansprüche 2 bis 6, dadurch gekennzeichnet, daß das Material (46) aus einem durch Zusammensintern von 5 bis 50 Mikrometer dicken Nickel-Chrom-Fasern hergestellten Filz besteht und eine Porosität von mehr als 95 % aufweist.

## Claims

1. Method of making curved and toughened automobile panes, according to which the glass sheets (11) are heated to the bending temperature in a straight-through horizontal furnace (8), are bent to the desired shaped in a horizontal position by pressing between a solid upper mould (14) and a bending frame (32) which can be displaced between the bending station (9) and the station for toughening by blowing of cold air (10), the bending frame being open at its centre and composed of several parts (33, 35), movable relative to one another, and serving as a lower bending mould, at least one of the lateral parts (35), folded up during the pressing to form a relatively highly curved marginal zone (3), being covered with an elastically deformable felted material (46) of refractory fibres, and then moved away from the glass sheet during the toughening of the glass sheet (11).

2. Device for carrying out the method according to Claim 1, constituted of a horizontal straight-through furnace (8) for heating the glass sheets (11) to the bending temperature, of a bending station (9) adjacent to the furnace (8) and comprising a solid upper mould (14), of a toughening station (10) disposed after the having station (9) and of at least one bending frame (32) capable of being displaced between the bending station (9) and the toughening station (10), this bending frame being open at its centre with at least one lateral part (35) movable relative to the remainder of the bending frame, and coated with an elastically deformable felted material (46) of refractory fibres.

3. Device according to Claim 2, characterized in that the felted material (46) has a thickness of from 2 to 10 mm.

4. Device according to one of Claims 2 or 3, characterized in that the felted material (46) is constituted of mineral fibres.

5. Device according to Claim 4, characterized in that said mineral fibres are metal fibres.

6. Device according to Claim 5, characterized in that said metal fibres are of a nickel-chrome alloy.

7. Device according to one of Claims 2 to 6, characterized in that the porosity to air of the felted material (46) exceeds 80 %.

8. Device according to one of Claims 2 to 6, characterized in that said material (46) is a felt obtained by agglomeration of nickel-chrome fibres of 5 to 50 micrometers thickness and of a porosity exceeding 95 %.
